Europäisches Patentamt

European Patent Office

Office européen des brevets

(19)

(11) **EP 1 057 081 B1**

(12) **EUROPEAN PATENT SPECIFICATION**

(45) Date of publication and mention
of the grant of the patent:
**08.12.2004 Bulletin 2004/50**

(51) Int Cl.⁷: $G03H\ 1/06$

(86) International application number:
**PCT/IB1998/000214**

(21) Application number: **98902146.4**

(22) Date of filing: **23.02.1998**

(87) International publication number:
**WO 1999/042908 (26.08.1999 Gazette 1999/34)**

(54) **LINEAR CONOSCOPIC HOLOGRAPHY**

LINEARE KONOSKOPISCHE HOLOGRAPHIE

HOLOGRAPHIE CONOSCOPIQUE LINEAIRE

(84) Designated Contracting States:
**AT BE CH DE DK ES FI FR GB GR IE IT LI LU MC
NL PT SE**

(43) Date of publication of application:
**06.12.2000 Bulletin 2000/49**

(73) Proprietor: **Optimet Optical Metrology Ltd.
91450 Jerusalem (IL)**

(72) Inventors:
• **SIRAT, Gabriel, Y.**
**97875 Jerusalem (IL)**

• **VECHT, Jacob**
**93226 Jerusalem (IL)**
• **MALET, Yann**
**F-78210 Saint-Cyr L'Ecole (FR)**

(74) Representative: **Greene, Simon Kenneth et al
Elkington and Fife LLP,
Prospect House,
8 Pembroke Road
Sevenoaks, Kent TN13 1XR (GB)**

(56) References cited:
**US-A- 5 081 540**

**Description**

Technical Field

The present invention relates to optical metrology, and, in particular, to interferometric metrology employing a single beam.

Background Art

In ordinary holography, coherent light emanating from a source region is caused to interfere with a coherent reference beam in order to construct an interferogram in which the three-dimensional characteristics of the source region are encoded. Conoscopy is a distinct interferometric technique capable of determining the distance to a point within an object volume without employing a reference beam. Instead, light emanating from a source region is prepared in a defined state of polarization and then passed through an anisotropic optical element in which one polarization suffers phase retardation with respect to the other. The two polarization components emerging from the anisotropic optical element interfere with one another, producing a interferogram in the detector plane. The interferogram can be recorded using various means, the most useful being an electronic detector array such as a charge-coupled device (CCD) camera. The electronic image of the interferogram may then be deconvolved to determine the three-dimensional locus of the origin of the light. Conoscopy, thus, requires only a single camera for determining object contour. Furthermore, the source of illumination is not required to be coherent.

Conoscopy is the subject of various patents, including U.S. Patent Nos. 4,602,844, 4,976,504, 5,081,540, and 5,081,541. Several embodiments have been taught which differ in the method of illuminating the object volume. The light which emanates from the source region may be actively provided, such as by a scanned beam, in which case additional information regarding the position of illumination at a particular time is available for deriving from the conoscopic interferogram the precise three-dimensional profile of the source region. Alternatively, a passive technique exists, referred to in the art as "conoscopic holography," in which diffuse light is used. In the latter case, no additional information is available and the deconvolution of the conoscopic image is significantly more computationally complex. The source region may be illuminated with a narrow beam, providing the conoscopic interferometer with, essentially, a point source in the object volume. A system employing this mode of operation is referred to as a conoscopic "probe." Alternatively, the source region may be illuminated with a grid (or "cloud") of points, or with a line. A system employing a line of illumination is referred to as a conoscopic "profilometer."

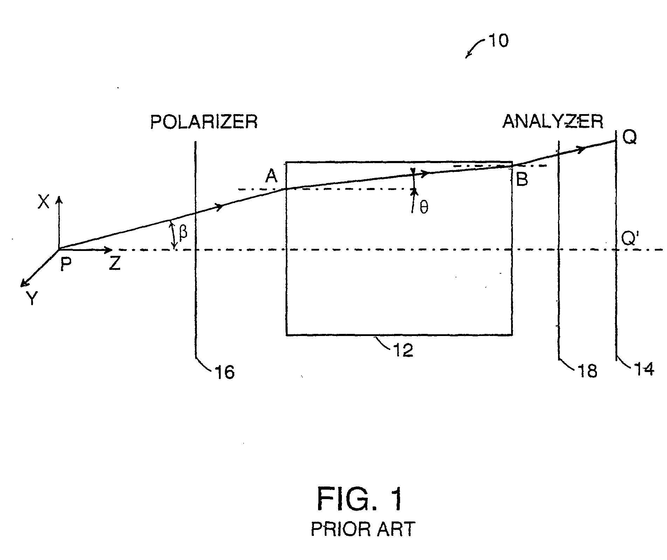

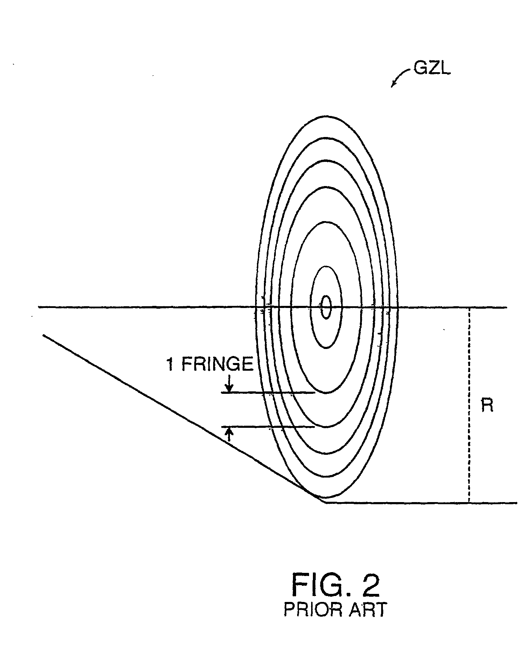

Common to the modes in which conoscopy is employed is a uniaxial crystal, which exhibits different indices of refraction (and, as such, is birefringent) for components of light polarized in directions parallel or normal to a particular axis referred to as the crystal's extraordinary axis. The prior conoscopic art may be understood by reference to FIG. 1. As shown in FIG. 1, light emanating from a point P in the object region is circularly polarized by polarizer **16**, introducing a 90° phase shift between the two polarization components. The phase components are differentially delayed in uniaxial crystal **12**, and then analyzed by means of polarization analyzer **18**, which is circular polarizer. Other embodiments are known in the art in which one or both of the polarizer **16** and the polarization analyzer **18** is replaced by a linear polarizer. These embodiments are described in U.S. patents 4,602,844 and 4,976,504, which are incorporated herein by reference. The overlay of polarization components gives rise to the cylindrically symmetric pattern known as a Gabor Zone Lens (GZL), shown in FIG. 2. The projection of the cylindrical interference pattern on detector plane **14** has, essentially, a quadratic dependence on distance from the center of the GZL, for reasons discussed in detail by G. Sirat, *Conoscopic Holography: Part I, Basic Principles and Physical Basis,* Journal of the Optical Society of America A, 9:84 (1992), which is hereby incorporated by reference.

Sirat teaches that the response of the recording means in the detector plane is proportional to the modulus of the impinging light intensity, where the light amplitudes are expressed as complex values. In the language of quantum optics, the recording means is referred to as a "square-law" detector. As a consequence, the interference term, i.e., the term of the detector response which is sensitive to the relative phase of the interfering polarization components, is proportional to the cosine of $\Delta\phi$, where $\Delta\phi$ is the difference in the phase of the light between the polarization components emanating from a single point in the object volume.

Terms relevant to both the prior art and the current invention are defined with reference to FIG. 1 which is a simplified depiction of a prior art conoscope, designated generally by numeral 10. The axis (not shown) of anisotropic crystal 12 having the highest degree of rotational symmetry is referred to, conventionally, as the "optic axis" of the crystal, and in the simplified "on-axis" case depicted in FIG. 1, is assumed to coincide with the geometrical axis z of the system. Light emanating from point P of the source region passes through crystal 12 with the phase difference $\Delta\phi$ of one polarization with respect to the other given, for light reaching detector plane 14 at point Q by:

$$\Delta\phi = (\pi\kappa_0)\, r^2/z_C{}^2$$

where:

r is the lateral displacement in detector plane 14 of point Q from the geometrical axis z whose intersection with detector plane 14 is designated Q';

$\kappa_0$ is the unitless conoscopic parameter defined in equation A-13 of Sirat; and

$z_C$ is the conoscopic corrected distance, defined in equation A-8 of Sirat, which can be converted to the actual distance between conoscope 10 and object point P by knowledge of system parameters, as taught by Sirat, or by calibration means known in the art.

Additionally, if the optic axis of crystal 12 is displaced with respect to the geometrical axis of the system by an angle, referred to as the "off-axis angle", $\theta_{OFF}$, taken, without loss of generality, to be in the direction of the x axis, then the phase difference $\Delta\phi$ is given by:

$$\Delta\phi = (\pi\kappa_0) \, ((x-x_0-\theta_{OFF} z_C)^2 + (y-y_0)^2)/z_C{}^2$$

where $x_0$ and $y_0$ refer to the coordinates of the geometric axis in detector plane 14.

In either the on-axis or more general case, it can be seen that the phase difference $\Delta\phi$ depends quadratically on the displacement of detector point Q from the geometric axis, and, more particularly, depends quadratically on the displacement of detector point Q from the geometric axis along a particular direction in the detector plane. This behavior is referred to as a "quadratic fringe," and is illustrated by the interferogram shown in FIG. 2. The resulting pattern of annular interference fringes is referred to as a Gabor Lens Zone interferogram.

In practical applications of conoscopy, which include quality inspection in the production of precision components, speed and precision requirements suggest the advantages of replacing the known quadratic, or parabolic, dependence of the interference pattern on distance from the center of the GZL with a linear fringe fundamental response. In the prior art quadratic case, determination of the distance to the object point requires simultaneous determination of two parameters: the centroid and coefficient of the parabola. The measurement is correspondingly less accurate, for a given exposure, than in the linear case, where the same measurement requires algorithmic determination of the slope alone.

Additionally, deconvolution of the interferogram in the known quadratic case requires specialized, and necessarily more complex and time-consuming, computational algorithms.

Additionally, the quadratic dependence introduces an aberration due to the orientation of the extraordinary axis of the birefringent medium in each of the two orthogonal planes containing the optical axis of the system. This phenomenon effectively reduces the useful numerical aperture of the system, and, consequently, limits the light flux which can be captured in the detector plane, and increases the time required for a specified level of measurement accuracy.

Summary of the Invention

The present invention provides, in one embodiment, a linear conoscope, having a geometrical axis, for producing a conoscopic interferogram of an object. The conoscopic interferogram occurs in a detector plane perpendicular to the geometrical axis and has a phase difference substantially linearly dependent on displacement from the geometrical axis. The linear conoscope has a first anisotropic optical element having an optic axis such that the optic axis of the first anisotropic element and the geometrical axis of the linear conoscope form a first rotation angle and define a fiducial plane. The first anisotropic element has an extraordinary axis within a plane perpendicular to the optic axis of the first anisotropic element. The invention also provides a second anisotropic optical element with an optic axis.

The second anisotropic optical element is coupled to the first anisotropic optical element such that the optic axis of the second anisotropic optical element forms an angle with respect to the geometrical axis within the fiducial plane, the angle assuming a value substantially equal in value and opposite in sign to the first rotation angle. The extraordinary axis of the second anisotropic optical element is substantially parallel to the extraordinary axis of the first anisotropic optical element. The linear conoscope also has a polarization analyzer inserted between the second anisotropic optical element and the detector plane.

In further embodiments, a polarizer, which may be a circular polarizer, is inserted between the first optical element and the object. The linear conoscope, in yet another embodiment, may have a source of linearly polarized light for illuminating the object. Additional elements which the linear conoscope may have in other embodiments include a detector array for receiving the interferogram in the detector plane and a signal processor, which may be a digital signal processor, for deriving from the interferogram the distance between the surface of the object and a fiducial position on the apparatus.

Another embodiment of the invention provides a linear conoscope which has only a single anisotropic optical element with a large off-axis angle such that the phase shift of one polarization of light with respect to an orthogonal polarization is dominated by a linear term.

Brief Description of the Drawings

The foregoing features of the invention will be more readily understood by reference to the following detailed description taken with the accompanying drawings, in which:

FIG. 1 is a schematic representation of a prior art conoscopic apparatus having quadratic fringes.

**FIG. 2** shows the concentric annular interference fringes of a Gabor Lens Zone interferogram provided by the prior art conoscopic apparatus of FIG. 1.

**FIG. 3** is a diagram showing the optical layout of a linear conoscope in accordance with a preferred embodiment of the present invention.

**FIG. 4** is a plot of the intensity pattern of an interferogram obtained using the linear conoscope of FIG. 3.

**FIG.5** is a diagram showing the optical layout of an alternative embodiment of the present invention having an alternate relative orientation of the anisotropic elements.

**FIG. 6** is a diagram showing the optical layout of an alternative embodiment of the present invention having an anisotropic element with a large off-axis angle.

Detailed Description of Specific Embodiments

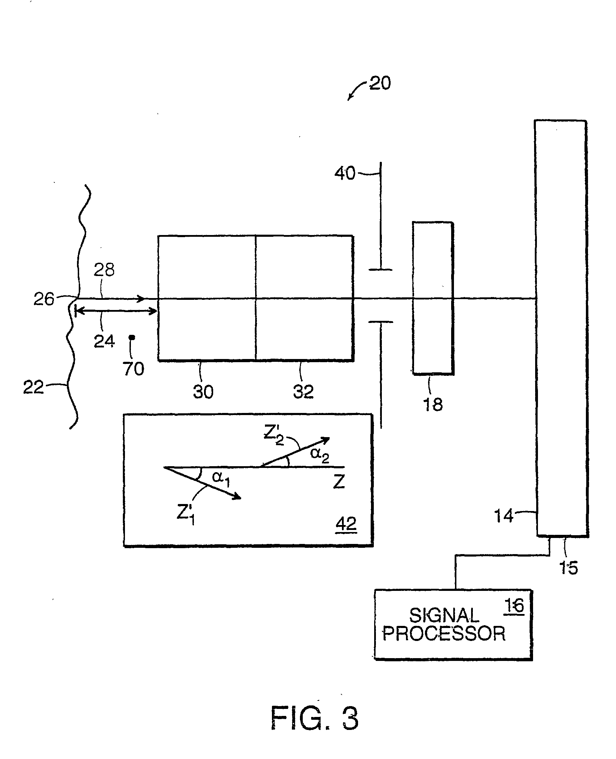

A preferred embodiment of the invention is now described with reference to FIG. 3 wherein a diagram shows the optical layout of a linear conoscope, designated generally by numeral **20**. Linear conoscope **20** is used in conjunction with an object **22**, particularly for the purpose of measuring distance **24** between linear conoscope **20** and a particular object point **26** on the surface of object **22**. More generally, object **22** may be any scene or the image of any scene through any optical system. A first anisotropic optical element **30** and a second anisotropic element **32** are configured with respect to object **22** so that light emanating form the surface of object **22** passes through both anisotropic optical elements **30** and **32**.

The light emanating from the surface of object **22** must be prepared in a definite state of polarization so that linear conoscope **20** will operate to delay one component of polarization with respect to another. The polarization may be provided by means of illuminating object **22** with polarized light, or, alternatively, by interposing a polarizer, of any sort known in the art, between object **22** and linear conoscope **20**. Both anisotropic optical elements **30** and **32** are composed of a transparent crystalline material which has the property that the index of refraction of the material differs for light polarized in different orientations with respect to the normal axes of the crystal. As is well-known in the art of optics, crystalline materials which may be used include, by way of example, calcite, lithium niobate, $YVO_4$, and $\beta$-BBO. While anisotropic optical elements **30** and **32** may be composed of different materials, it is preferred that identical materials be used to avoid aberrations due to higher-order non-linear optical effects. U.S. patent 4,602,844, incorporated herein by reference, describes the use of optical activity as an alternative to birefringence to provide the requisite optical anisotropy. It is also advantageous, in some circumstances, to employ a larger number of anisotropic elements, in order to cancel aberrations.

Linear fringe response is achieved by cancellation of the quadratic term in the expression, above, for net phase difference, $\Delta\phi$. In the preferred embodiment, this is accomplished by double rotation of the two anisotropic optical elements, **30** and **32**. In the present description, **z** refers to the direction defined by the geometrical axis of the optical system. Double rotation refers to displacement of the optic axis of an anisotropic optical element by a polar angle $\alpha$ away from **z,** and then by a subsequent rotation of the minor principal axes of the anisotropic optical element about the major principal axis by an azimuthal angle $\beta$. The polar and azimuthal angles through which first anisotropic optical element **30** is rotated are referred to as $\alpha_1$ and $\beta_1$. The polar and azimuthal angles through which second anisotropic optical element **32** is rotated are referred to as $\alpha_2$ and $\beta_2$. The optic axis of first anisotropic optical element **30** and the geometrical axis of the system are, together, taken to define a fiducial plane, in terms of which the first rotation of the second anisotropic optical element may be defined.

In order to provide cancellation of the quadratic phase shift terms, anisotropic optical elements, **30** and **32** are each double rotated such that the respective first rotations are equal and opposite, $\alpha_1 = -\alpha_2$, while the second rotations are of equal magnitude, $|\beta_1| = |\beta_2|$. Thus, the ordinary or extraordinary axis of the second anisotropic optical element **32** is shifted by $\pi$ radians relative to the first anisotropic optical element **30**. The absolute magnitude of $\alpha_i$ (I=1 or 2) is typically in the range between $0°$ (on-axis operation) and $20°$. Double rotation, as described, cancels the quadratic term in the expression for phase difference $\Delta\phi$ and produces linear fringes, when $\alpha$ is approximately equal to $\beta$, however $\beta$ may typically range between half and twice $\alpha$.

Additionally, a field stop **40** is provided directly in the optical path or in auxiliary optics, as is well known to persons skilled in the art, so as to define an etendue over which the operation of linear conoscope remains linear. The numerical aperture of the system is typically on the order of 0.1 rad.

Opposing faces of anisotropic optical elements, **30** and **32** are coupled to each other in a manner which prevents spurious reflection of light, as is well known in the optical art. Means for achieving such coupling include air-spacing of the optical elements, with anti-reflective coatings applied to the surfaces of the optical elements, as known in the art. Other means for coupling the optical elements include bonding the optical elements with index-matching glue, and the use of glue with additional anti-reflective treatment of the opposing surfaces.

Operation of linear conoscope **20** in the linear mode, as has been described, provides fringes in detector plane **14**, such that the phase difference $\Delta\phi$ depends linearly on the distance from the optical axis, as measured along one of the axes, taken, without loss of generality, as **x**. The optical fringes are converted by detector array **15** to a sequence of electronic signals for subsequent image processing. More particularly, phase difference $\Delta\phi$ may be expressed as:

$$\Delta\phi = (\pi\kappa_1) (2\; \theta_{OFF} \,(x\text{-}x_0)/z_c) + \theta_{OFF}^2,$$

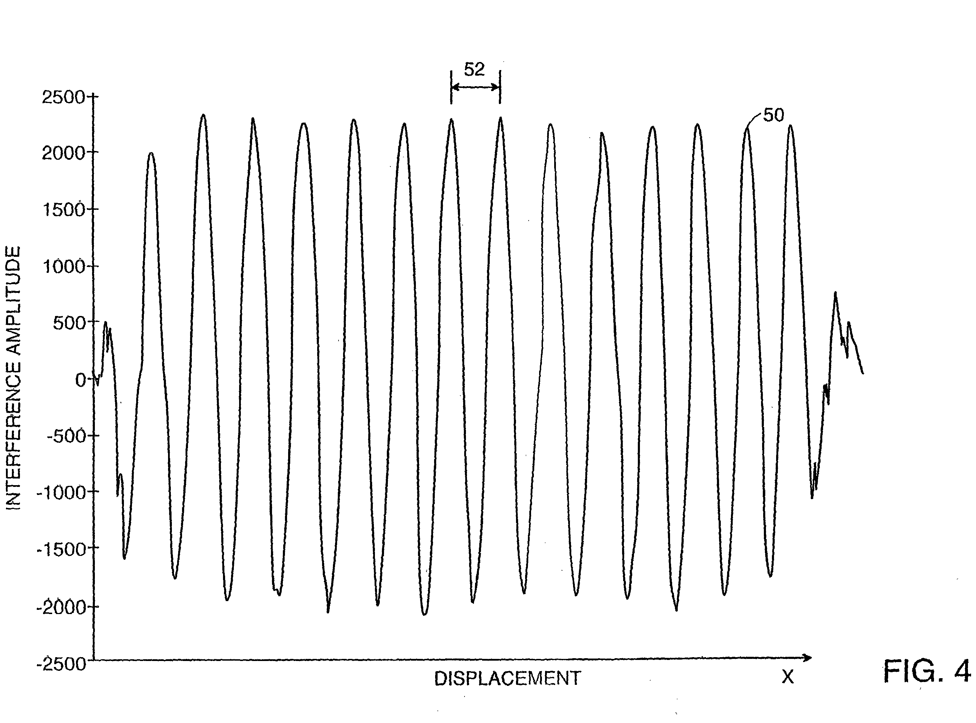

where $\kappa_1$ is a linear conoscopic constant, determined by system parameters, and other variables are as defined above. Thus, the interference pattern due to a point source object is now a cosine of **x**, designated by numeral **50**, shown in FIG. 4. The conoscopic distance $z_c$, and, thus, the actual distance from linear conoscope **20** to illuminated point **P**, may now be determined solely from the period of the cosine **50**. The period of a cosine is readily determined using commonly used algorithms and digital signal processors.

Referring again to FIG. 3, in an alternative embodiment of the invention, an in-situ reference point **70** is provided, illuminated by the same illuminating source as illuminates object **22**. In-situ reference point **70** is coupled to linear conoscope **20** at a fixed position in the field so that the interferogram of the point is recorded by the system in the same way as the interferogram corresponding to object point **26**, and the distance to point **70** is computed. The interferogram of point **70** may either be recorded on a separate portion of detector array **15** or recorded on the same part of detector array **15** with a spatial frequency **52** (shown in FIG. 4) being sensibly different from that of the object interferogram by virtue of the distinct depth separation of reference point **70** from object point **26**.Thus, the interferograms due to reference point **70** and object point **26** may either be separated by appropriate signal processing, using algorithms well known to persons skilled in the art, or else recorded sequentially. In either case, the interferogram due to reference point **70** serves as a calibrator for linear conoscope **20**, and the drift, temperature dependence or other changes in system calibration may be corrected in subsequent signal processing.

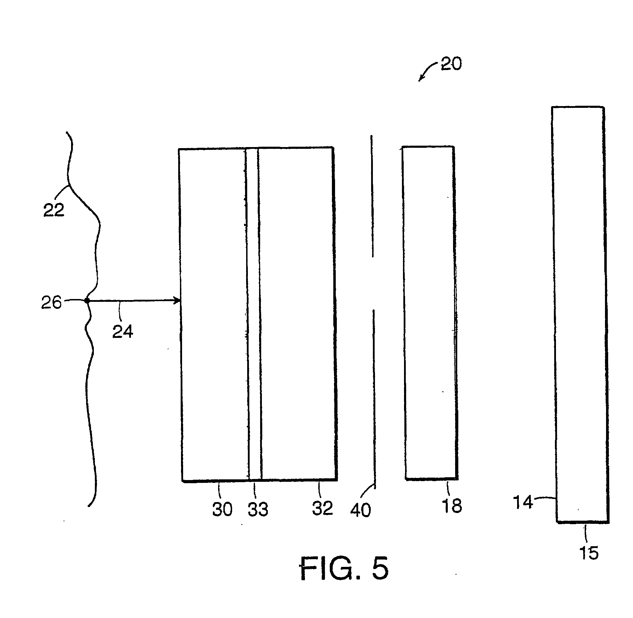

In an alternate embodiment of the invention, described with reference to FIG. 5, anisotropic optical elements **30** and **32** are oriented such that off-axis angle $\theta_{OFF}$ of anisotropic optical element **30** is positive and off-axis angle $\theta_{OFF}$ of anisotropic optical element **32** is negative. In order for the quadratic terms to cancel and for the linear terms to contribute additively, a half-wave plate **33** is introduced in the optical path, between anisotropic optical elements **30** and **32** so as to provide a 90° shift and sign reversal in the polarization of the incident light relative to the direction defined by $\theta_{OFF}$ with respect to the geometrical axis.

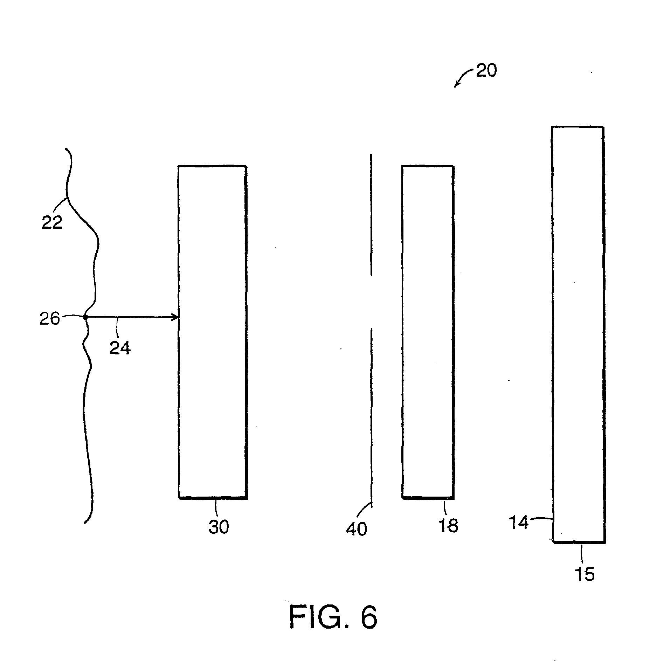

Referring now to FIG. 6, in a further alternate embodiment, the linear contribution to phase difference $\Delta\phi$ is caused to dominate at detector plane **14** by using a single anisotropic optical element **30** positioned such that optic axis **z'** is canted from geometrical axis **z** by a large off-axis angle $\theta_{off}$. More particularly, for a single-crystal embodiment of the linear conoscope, the off-axis angle must be, typically, at least five times as large as the cone subtended within the crystal, which is on the order of 0.1 radian, or $\sim 7°$.

Referring, again, to FIG. 3, the present invention, in any of the embodiments which have been described, may employ an areal detector array **15** in detector plane **14**, in conjunction with laser illumination of a line on the object surface **22** transverse to a fiducial plane. Auxiliary optics (not shown) are used, as well known to a person skilled in the art, to image the illuminated line onto detector array **15** so that each row of detector **15** sees a single point of the line. Areal detector array may be read out and analyzed to provide the depths, or profile, of the entire line on the object surface.

The described embodiments of the inventions are intended to be merely exemplary and numerous variations and modifications will be apparent to those skilled in the art. All such variations and modifications are intended to be within the scope of the present invention as defined in the appended claims.

**Claims**

1. A conoscope (20), having a geometrical axis, for producing a conoscopic interferogram of an object (22), the conoscopic interferogram occurring in a detector plane (14) perpendicular to the geometrical axis, the conoscope (20) comprising a first anisotropic optical element (30) having an optic axis such that the optic axis of the first anisotropic element (30) and the geometrical axis of the linear conoscope form a first rotation angle and a fiducial plane, the first anisotropic optical element (30) further having an extraordinary axis within a plane perpendicular to the optic axis of the first anisotropic element (30), and a polarisation analyser (18); **characterised in that** the conoscope is a linear conoscope (20) having a phase difference substantially linearly dependent on displacement from the geometrical axis the conoscope further comprising:

   a second anisotropic optical element (32), having an optic axis, the second anisotropic optical element (32) being coupled to the first anisotropic optical element (30) such that the optic axis of the second anisotropic optical element (32) forms an angle with respect to the geometrical axis within the fiducial plane, said angle assuming a value substantially equal in value and opposite in sign to the first rotation angle, the second anisotropic optical element (32) further having an extraordinary axis substantially parallel to the extraordinary axis of the first anisotropic optical element (30) wherein the polarization analyzer (18) is inserted between the second anisotropic optical element (32) and the detector plane (14).

2. A linear conoscope (20) according to claim 1 further comprising a polarizer (16) inserted between the first anisotropic optical element (30) and the object (22).

3. A linear conoscope (20) according to claim 2 wherein the polarizer (16) is a circular polarizer.

4. A linear conoscope (20) according to claim 1 further comprising a source of linearly polarized light for illuminating the object (22).

5. A linear conoscope (20) according to claim 1 further comprising a detector array (15) for receiving the interferogram at the detector plane (14).

6. A linear conoscope (20) according to claim 5 further comprising a signal processor for deriving from the interferogram the distance between the linear conoscope (20) and the object (22).

7. A linear conoscope (20) according to claim 1 further comprising an in-situ reference (70) for establishing a distance scale, the in-situ reference (70) comprising a material reference point disposed between the first anisotropic element (30) and the object (22).

8. A linear conoscope (20) according to claim 6 wherein the signal processor is a digital signal processor.

9. A conoscope (20), having a geometrical axis, for producing a conoscopic interferogram of an object (22), the conoscopic interferogram occurring in a detector plane (14) perpendicular to the geometrical axis, the conoscope (20) comprising:

(a) an anisotropic optical element (30) having a field of view, **characterized by** an opening angle, and having an optic axis such that the optic axis of the anisotropic element (30) and the geometrical axis of the linear conoscope (20) form an off-axis angle; and
(b) a polarization analyzer (18) inserted between the anisotropic optical element (30) and the detector plane (14); **characterised in that**:

the conoscope is a linear conoscope (20) having a phase difference substantially linearly dependent on displacement from the geometrical axis and the off-axis angle has a measure larger than 0.5 radians.

**Patentansprüche**

1. Ein Konoskop (20), das eine geometrische Achse aufweist, zum Erzeugen eines konoskopischen Interferogramms eines Objekts (22), wobei das konoskopische Interferogramm in einer Detektorebene (14) auftritt, die senkrecht zu der geometrischen Achse ist, wobei das Konoskop (20) ein erstes anisotropes optisches Element (30), das eine optische Achse aufweist, derart, dass die optische Achse des ersten anisotropen Elements (30) und die geometrische Achse des linearen Konoskops einen ersten Drehwinkel und eine Justierebene bilden, wobei das erste anisotrope optische Element (30) ferner eine außerordentliche Achse innerhalb einer Ebene aufweist, die senkrecht zu der optischen Achse des ersten anisotropen Elements (30) ist, und einen Polarisationsanalysator (18) aufweist, **dadurch gekennzeichnet, dass** das Konoskop ein lineares Konoskop (20) ist, das einen Phasenunterschied aufweist, der im Wesentlichen linear abhängig von einer Verschiebung von der geometrischen Achse ist, wobei das Konoskop ferner folgende Merkmale aufweist:

ein zweites anisotropes optisches Element (32), das eine optische Achse aufweist, wobei das zweite anisotrope optische Element (32) mit dem ersten anisotropen optischen Element (30) derart gekoppelt ist, dass die optische Achse des zweiten anisotropen optischen Elements (32) einen Winkel bezüglich der geometrischen Achse innerhalb der Justierebene bildet, wobei der Winkel einen Wert annimmt, der bezüglich des ersten Drehwinkels im Wert im Wesentlichen gleich und im Vorzeichen entgegengesetzt ist, wobei das zweite anisotrope optische Element (32) ferner eine außerordentliche Achse aufweist, die im Wesentlichen parallel zu der außerordentlichen Achse des ersten anisotropen optischen Elements (30) ist, wobei der Polarisationsanalysator (18) zwischen dem zweiten anisotropen optischen Element (32) und der Detektorebene (14) eingefügt ist.

2. Ein lineares Konoskop (20) gemäß Anspruch 1, das ferner einen Polarisator (16) aufweist, der zwischen dem ersten anisotropen optischen Element (30) und dem Objekt (22) eingefügt ist.

3. Ein lineares Konoskop (20) gemäß Anspruch 2, bei dem der Polarisator (16) ein Zirkularpolarisator ist.

4. Ein lineares Konoskop (20) gemäß Anspruch 1, das ferner eine Quelle von linear polarisiertem Licht zum Beleuchten des Objekts (22) aufweist.

**5.** Ein lineares Konoskop (20) gemäß Anspruch 1, das ferner ein Detektorarray (15) zum Empfangen des Interferogramms an der Detektorebene (14) aufweist.

**6.** Ein lineares Konoskop (20) gemäß Anspruch 5, das ferner einen Signalprozessor zum Ableiten des Abstands zwischen dem linearen Konoskop (20) und dem Objekt (22) von dem Interferogramm aufweist.

**7.** Ein lineares Konoskop (20) gemäß Anspruch 1, das ferner eine In-situ-Referenz (70) zum Einrichten einer Abstandsskala aufweist, wobei die In-situ-Referenz (70) einen materiellen Referenzpunkt aufweist, der zwischen dem ersten anisotropen Element (30) und dem Objekt (22) angeordnet ist.

**8.** Ein lineares Konoskop (20) gemäß Anspruch 6, bei dem der Signalprozessor ein Digitalsignalprozessor ist.

**9.** Ein Konoskop (20), das eine geometrische Achse aufweist, zum Erzeugen eines konoskopischen Interferogramms eines Objekts (22), wobei das konoskopische Interferogramm in einer Detektorebene (14) auftritt, die senkrecht zu der geometrischen Achse ist, wobei das Konoskop (20) folgende Merkmale aufweist:

> (a) ein anisotropes optisches Element (30), das ein Sichtfeld aufweist, **gekennzeichnet durch** einen Öffnungswinkel, und das eine optische Achse aufweist, derart, dass die optische Achse des anisotropen Elements (30) und die geometrische Achse des linearen Konoskops (20) einen außeraxialen Winkel bilden; und

> (b) einen Polarisationsanalysator (18), der zwischen dem anisotropen optischen Element (30) und der Detektorebene (14) eingefügt ist; **dadurch** gekennzeichnet, dass:

> > das Konoskop ein lineares Konoskop (20) ist, das einen Phasenunterschied aufweist, der im Wesentlichen linear abhängig von einer Verschiebung der geometrischen Achse ist, und der außeraxiale Winkel ein Maß aufweist, das größer als 0,5 rad ist.

## Revendications

**1.** Conoscope (20), possédant un axe géométrique, pour produire un interférogramme conoscopique d'un objet (22), l'interférogramme conoscopique se produisant dans un plan de détecteurs (14) perpendiculaire à l'axe géométrique, le conoscope (20) comprenant un premier élément optique anisotrope (30) possédant un axe optique tel que l'axe optique du premier élément anisotrope (30) et l'axe géométrique du conoscope linéaire forment un premier angle de rotation et un plan de base, le premier élément optique anisotrope (30) possédant en outre un axe extraordinaire à l'intérieur d'un plan perpendiculaire à l'axe optique du premier élément anisotrope (30), et un analyseur de polarisation (18) ; **caractérisé en ce que** le conoscope est un conoscope linéaire (20) qui a une différence de phase en grande partie dépendante linéairement du déplacement par rapport à l'axe géométrique, le conoscope comprenant en outre :

> un deuxième élément optique anisotrope (32), possédant un axe optique, le deuxième élément optique anisotrope (32) étant couplé au premier élément optique anisotrope (30) de telle sorte que l'axe optique du deuxième élément optique anisotrope (32) forme un angle par rapport à l'axe géométrique à l'intérieur du plan de base, ledit angle prenant une valeur en grande partie égale en valeur et opposée en signe au premier angle de rotation, le deuxième élément optique anisotrope (32) possédant en outre un axe extraordinaire en grande partie parallèle à l'axe extraordinaire du premier élément optique anisotrope (30) dans lequel l'analyseur de polarisation (18) est inséré entre le deuxième élément optique anisotrope (32) et le plan de détecteurs (14).

**2.** Conoscope linéaire (20) selon la revendication 1 comprenant en outre un polariseur (16) inséré entre le premier élément optique anisotrope (30) et l'objet (22).

**3.** Conoscope linéaire (20) selon la revendication 2 dans lequel le polariseur (16) est un polariseur circulaire.

**4.** Conoscope linéaire (20) selon la revendication 1 comprenant en outre une source de lumière polarisée linéairement pour illuminer l'objet (22).

**5.** Conoscope linéaire (20) selon la revendication 1 comprenant en outre un ensemble de détecteurs (15) pour recevoir l'interférogramme au niveau du plan de détecteurs (14).

**6.** Conoscope linéaire (20) selon la revendication 5 comprenant en outre un processeur de signaux pour déduire depuis l'interférogramme la distance entre le conoscope linéaire (20) et l'objet (22).

**7.** Conoscope linéaire (20) selon la revendication 1 comprenant en outre une référence in situ (70) pour établir une échelle de distance, la référence in situ (70) comprenant un point de référence matériel disposé entre le premier élément anisotrope (30) et l'objet (22).

8. Conoscope linéaire (20) selon la revendication 6 dans lequel le processeur de signaux est un processeur de signaux numériques.

9. Conoscope (20), possédant un axe géométrique, pour produire un interférogramme conoscopique d'un objet (22), l'interférogramme conoscopique se produisant dans un plan de détecteurs (14) perpendiculaire à l'axe géométrique, le conoscope (20) comprenant :

(a) un élément optique anisotrope (30) possédant un champ d'observation, **caractérisé par** un angle s'ouvrant, et possédant un axe optique tel que l'axe optique de l'élément anisotrope (30) et l'axe géométrique du conoscope linéaire (20) forment un angle hors axe ; et
(b) un analyseur de polarisation (18) inséré entre l'élément optique anisotrope (30) et le plan de détecteurs (14) ; **caractérisé en ce que** :

le conoscope est un conoscope linéaire (20) qui a une différence de phase en grande partie dépendante linéairement du déplacement par rapport à l'axe géométrique et l'angle hors axe a une mesure supérieure à 0,5 radians.

FIG. 1
PRIOR ART

FIG. 2
PRIOR ART

FIG. 3

FIG. 4

EP 1 057 081 B1

FIG. 5

FIG. 6